# EUROPÄISCHE PATENTANMELDUNG

(11) **EP 3 040 296 A1**
(43) Veröffentlichungstag der Anmeldung: **06.07.2016**
(21) Anmeldenummer: 15002189.7
(22) Anmeldetag: 24.07.2015
(51) Int. Cl.: B65G 54/02, B65G 35/08, B65G 37/02

(54) **MODULARES MONTAGE-TRANSFERSYSTEM**

(30) Priorität: 09.08.2014 DE 202014006420 U
(71) Anmelder: Pfuderer, Markus, 70199 Stuttgart (DE)
(72) Erfinder: Pfuderer, Reinhold, 71563 Affalterbach (DE)

(57) **Zusammenfassung**

Transfermodul für modulartiges Montage-Transfersystem mit einer Führung (35), entlang der ein oder mehrere Werkstückträger (17) verfahrbar sind, die durch einen elektromagnetischen Linearantrieb (63), welcher ein Primärteil (64) und ein Sekundärteil (65) umfasst, verfahrbar angetrieben sind, wobei eine erste Führung (35) für einen Vortransport und eine zweite Führung (35) für einen Rücktransport des zumindest einen Werkstückträgers (17) vorgesehen ist und die erste und zweite Führung (35) jeweils getrennt mit einer Unterbrechung zueinander in jeweils einer Transportebene an einem gemeinsamen Träger (53) oder Grundgestell angeordnet sind.

## Beschreibung

Die Erfindung betrifft ein Transfermodul, ein Montagemodul und ein Umsetzmodul für ein modulares Montage-Transfersystem mit einem Grundgestell und mit einer davon getragenen Transportvorrichtung mit mehreren Werkstückträgern, die zum Transport von Werkstücken entlang des Grundgestells vorgesehen und in einer Transportebene in einer Förderrichtung entlang einer Förderstrecke verfahrbar sind.

Aus der US 6,876,107 B2 ist ein Transfermodul mit Werkstückträgern bekannt, welche entlang einer Führung durch einen elektromagnetischen Linearantrieb verfahrbar angetrieben sind. An der Führung ist ein Primärteil und an dem Werkstückträger ein Sekundärteil des Linearantriebs angeordnet. Das Primärteil wird durch elektromagnetisch ansteuerbare Spulen gebildet. Das Sekundärteil durch Permanentmagnete. Bei diesem Transfermodul ist vorgesehen, dass die Werkstückträger durch den Linearantrieb schwebend zur Führung gehalten werden und lediglich eine seitliche Führung der Werkstückträger zur Fahrschiene vorgesehen ist, damit die Werkstückträger entlang der vorgesehenen Transportbahn geführt werden können. Analoges ist aus der DE 10 2009 002 609 A1 bekannt.

Aus der DE 195 31 578 B4 ist eine Montagemaschine bekannt, welche modular aufbaubar ist und ein Umlenkmodul, ein Antriebsmodul und wenigstens ein Stationsmodul umfasst. Dabei ist von einem Grundgestell oberhalb einer geschlossenen Deckplatte eine Transportvorrichtung aufgenommen. Diese umfasst ein Förderband mit fest daran angeordnetem Werkzeugträger, wobei das Förderband die einzelnen Werkstückträger, auf welche ein Werkstück aufsetzbar ist, in einer Transportebene an mehreren Bearbeitungsstationen vorbei führt. An einem Umlenkmodul wird das Förderband umgelenkt und die Werkstückträger in einer Überkopfanordnung zurückgeführt.

Aus der DE 197 41 322 B4 ist des Weiteren eine Montagemaschine mit einem analogen Aufbau der Transportvorrichtung bekannt. Beidseitig zur Transportvorrichtung sind einzelne Montagestationen vorgesehen, welche auf jeder Seite des Transportbandes innerhalb eines geschlossenen Rahmens durch jeweils eine horizontal ausgerichtete Antriebswelle angetrieben werden, die wiederum über einen gemeinsamen Antrieb angesteuert sind.

Bei Montage-Transfersystemen steht mehr und mehr im Vordergrund, dass diese einen modularen Aufbau aufweisen, so dass eine flexible Anpassung eines solchen Montage-Transfersystems aus einzelnen Modulen in einfacher Weise an verschiedene Montage- und/oder Bearbeitungsaufgaben ermöglicht ist, um Bauteile, Baugruppen oder Produkte zu handhaben, zu bearbeiten und/oder zu montieren.

Der Erfindung liegt deshalb die Aufgabe zugrunde, ein Transfermodul, ein Montagemodul und vorzugsweise ein Umsetzmodul für ein modulares Montage-Transfersystem sowie ein Montage-Transfersystem vorzuschlagen, welche modular aufbaubar sind, um eine Vielzahl von Anwendungs- und Einsatzfälle zu ermöglichen.

Diese Aufgabe wird durch ein Transfermodul für ein modulares Montage-Transfersystem gelöst, welches eine Führung für Werkstückträger umfasst, die einzeln und unabhängig voneinander entlang der Führung mit zumindest einem Linearantrieb angetrieben und verfahrbar sind, wobei eine erste Führung für einen Vortransport und eine zweite Führung für einen Rücktransport des zumindest einen darauf verfahrbaren Werkstückträgers vorgesehen ist und die erste und zweite Führung jeweils getrennt mit einer Unterbrechung zueinander in jeweils einer Transportebene an einem gemeinsamen Träger oder Grundgestell (24) angeordnet sind.

Diese Ausgestaltung ermöglicht, dass in einfacher Weise ein oder mehrere solche Transfermodule zur Bildung einer gemeinsamen Transportstrecke aneinander gereiht werden können und die Länge der Transfermodule und somit die gesamte Transportstrecke für die Bearbeitung der Werkstücke in einem Montage-Transfersystem variabel gehalten werden kann. Darüber hinaus ist ein einfacher Aufbau mit einer geringen Anzahl an Bauteilen gegeben. Des Weiteren kann dadurch auch eine platzsparende Anordnung für einen Rücktransport der Werkstückträger erfolgen.

Eine bevorzugte Ausgestaltung des Trägers sieht vor, dass eine Normale zur Werkstückauflagefläche des Werkstückträgers auf der ersten Führung für den Vortransport abweichend zu einer Normalen der Werkstückaufnahmefläche des Werkstückträgers auf der zweiten Führung für den Rücktransport ausgerichtet ist. Beispielsweise können die Werkstückaufnahmeflächen der Werkstückträger spiegelbildlich zueinander ausgerichtet sein, so dass in Abhängigkeit der Einbausituation beispielsweise die Werkstückaufnahmeflächen während des Vor- und Rücktransportes des Werkstückträgers beide horizontal oder beide vertikal ausgerichtet sind. Alternativ kann auch eine Werkstückaufnahmefläche des Werkstückträgers beim Vor- oder Rücktransport horizontal und die zweite Aufnahmefläche des Werkstückträgers beim Rück- oder Vortransport vertikal oder umgekehrt ausgerichtet sein.

Bevorzugt ist an einer Unterseite des Laufwagens des Werkstückträgers das Sekundärteil angeordnet und an dem Halteabschnitt des Trägers das Primärteil des elektromagnetischen Linearantriebes vorgesehen. Dadurch wird eine kompakte und schmal bauende Anordnung geschaffen, die insbesondere auch für kleine Werkstückabmessungen einsetzbar ist, so dass ein vergrößerter Bauraum beim Einsatz eines solchen Transfermoduls in einem Montage-Transfersystem verbleibt.

Eine bevorzugte Ausgestaltung des Transfermoduls sieht vor, dass der Träger als Grundgestell ausgebildet ist, zumindest einen Halteabschnitt umfasst, so dass an dem Halteabschnitt ein horizontal ausgerichteter Werkstückträger und/oder ein vertikal ausgerichteter Werkstückträger verfahrbar angetrieben ist. Dadurch kann eine Vereinfachung im konstruktiven Aufbau geschaffen werden.

Des Weiteren ist gemäß einer bevorzugten Ausführungsform vorgesehen, dass der Träger aus einem rohrförmigen Grundkörper besteht. Eine solche Anordnung weist den Vorteil auf, dass der durch den rohrförmigen Grundkörper gebildete Hohlraum oder Innenraum dazu genutzt werden kann, um Versorgungsleitungen, Datenleitungen und dergleichen darin geschützt anzuordnen. Vorteilhafterweise bildet der als rohrförmiger Grundkörper ausgebildete Träger zumindest eine Komponente des Grundgestells. Dadurch kann eine hinreichend steife Anordnung sowie ein einfacher konstruktiver Aufbau erzielt werden.

Eine weitere bevorzugte Ausgestaltung sieht vor, dass der Träger des Transfermoduls einen T-förmigen Grundkörper umfasst, der sich längs der Transportstrecke erstreckt und dessen vertikaler Steg auf einer Montageeinrichtung, insbesondere Montageplatte, angeordnet ist und dessen oberer Quersteg einen Halteabschnitt aufweist, so dass an dem Halteabschnitt zumindest ein horizontal ausgerichteter Werkstückträger oder zumindest ein vertikal ausgerichteter Werkstückträger verfahrbar angetrieben ist.

Bevorzugt ist vorgesehen, dass beidseitig am vertikalen bzw. stehenden Steg des T-förmigen Grundkörpers eine Führungsschiene der Führung angeordnet ist und der Werkstückträger entlang der Führung verfahrbar geführt ist und seitlich Wangen eines Laufwagens an den Führungsschienen angreifen, so dass der Werkstückträger horizontal ausgerichtet ist.

Der Werkstückträger kann somit eine U-förmige Gestalt aufweisen und umgreift einen Teil der Führung. Dadurch ist eine kompakte Anordnung ermöglicht, die auch hohe Lasten tragen kann und auch für große Werkstückabmessungen einsetzbar ist. Zudem kann dadurch eine einfache Schnittstelle bzw. Anschlussstelle für eine weitere Führung eines Transfermoduls vorgesehen sein, welches mit einem vorherigen Transfermodul zu einer Transportstrecke verbunden werden kann.

Eine weitere alternative Ausführungsform des Grundkörpers für das Transfermodul sieht vor, dass der Halteabschnitt zur vertikalen Ausrichtung des Werkstückträgers einen horizontal ausgerichteten Befestigungsabschnitt für die Führungsschiene der Führung aufweist, an welchen die seitliche Wangen des Laufwagens angreifen und einen vertikal ausgerichteten Befestigungsabschnitt aufweisen, an welcher das Primärteil des Linearantriebs angeordnet ist. Bei dieser Ausführungsform kann der prinzipielle Aufbau des T-förmigen oder rohrförmigen Grundkörpers beibehalten werden, wobei anstelle eines horizontal ausgerichteten Werkstückträgers ein vertikal ausgerichteter Werkstückträger entlang der Führung verfahrbar ist.

Eine bevorzugte Ausführungsform sieht vor, dass beidseitig des vertikalen Steges oder Rohres jeweils ein Befestigungsabschnitt für die Führungsschienen der Führung vorgesehen ist, so dass beidseitig zum vertikalen Steges oder Rohres vertikal ausgerichtete Werkstückträger verfahrbar daran angeordnet sind. Gemäß einer ersten Ausführungsform kann auf einer Seite des Transfermoduls ein Verfahren der Werkstückträger in Transportrichtung und auf der gegenüberliegenden Seite ein Rücktransport gegeben sein. Alternativ können die Werkstückträger auf beiden Seiten in die gemeinsame Transportrichtung verfahrbar angetrieben werden, wobei dann beispielsweise entlang einer Transportförderstrecke eine rechte und linke Montagelinie ermöglicht wird. Diese Ausführungsform kann im Aufbau des vertikalen Steges mit den daran angeordneten Befestigungsabschnitten auch spiegelbildlich zur Montagefläche vorgesehen sein, so dass in einem Transfermodul eine Vierfachverfahrstrecke vorgesehen sein kann.

In einer alternativen Ausführungsform des Trägers ist jeweils ein T-förmiger Grundkörper oder ein rohrförmiger Grundkörper spiegelbildlich zur gemeinsamen Montageeinrichtung bzw. Montageplatte des Transfermoduls ausgerichtet. Dadurch wird an einer Oberseite mit einem horizontal ausgerichteten Werkstückträger das Durchlaufen einer Transportstrecke ermöglicht, und ein Rücktransport erfolgt mittels einer hängenden Überkopfanordnung der Werkstückträger an dem zweiten T-förmigen oder rohrförmigen Grundkörper.

Des Weiteren ist an dem vertikalen Steg des T-förmigen Grundkörpers bevorzugt ein senkrecht dazu angeordneter zweiter Steg angeordnet, dessen oberer Quersteg einen Halteabschnitt bildet, so dass an diesem Halteabschnitt ein vertikal ausgerichteter Werkstückträger verfahrbar ist. Diese Ausführungsform weist den Vorteil auf, dass oberhalb einer Montageplatte sowohl eine horizontale als auch vertikale Transportebene geschaffen werden kann.

Eine weitere alternative Ausführungsform des Trägers für das Transfermodul umfasst eine Montageplatte, die aus einen plattenförmigen oder rohrförmigen Grundkörper gebildet ist, auf dessen Oberseite und Unterseite jeweils zumindest eine Führungsschiene zur Führung vorgesehen ist. Dadurch kann eine flache Bauweise geschaffen werden. Bevorzugt ist dabei zwischen zwei Führungsschienen insbesondere ein Primärteil des Linearantriebes angeordnet und gegenüber liegend an dem Werkstückträger das Sekundärteil vorgesehen. Dies ermöglicht nicht nur eine flachbauende Anordnung, sondern auch die Aufnahme von Werkstückträgern, welche die Ausbildung einer breiten Werkstückaufnahmefläche ermöglicht.

Des Weiteren ist bevorzugt vorgesehen, dass die Führung eine Präzisionsführung, insbesondere mit einer Profilschienenführung vorgesehen ist. Dadurch lässt sich eine exakte und präzise Führung und Positionierung der Werkstückträger in die jeweilige Montagepositionen ermöglichen, so dass auch hochgenaue Bearbeitungsschritte oder Montagetätigkeiten durch diese exakte Positionierung der Werkstückträger innerhalb einer Bearbeitungsstation ausgeführt werden können.

Die der Erfindung zugrundeliegende Aufgabe wird des Weiteren durch ein Montagemodul für ein modulares Montagetransfersystem gelöst, welches ein Grundgestell und ein Transfermodul zum Transport der Werkstücke mit mehreren Werkstückträgern entlang des Grundgestells umfasst wobei das vorstehend beschriebene Transfermodul nach einer der Ausführungsformen an dem Grundgestell vorgesehen ist. Durch die Montageeinrichtung, insbesondere Montageplatte des Transfermoduls wird eine einfache Anbindung eines solchen Transfermoduls an dem Grundgestell zur Bildung eines Montagemoduls ermöglicht.

Bevorzugt kann eine definierte Anschlussschnittstelle zwischen dem Transfermodul und dem Grundgestell zum Aufbau des Montagemoduls gegeben sein, so dass verschiedentliche Ausführungsformen des Transfermoduls in gleicher Weise an dem Grundgestell befestigbar sind und die Länge der Transportstrecke durch die Aneinanderreihung der Grundgestelle festgelegt werden kann.

Eine bevorzugte Ausgestaltung des Montagemoduls sieht vor, dass das Grundgestell eine nach oben offene U-förmige Ausnehmung aufweist, die sich vorteilhafterweise über die gesamte Länge des Grundgestells erstreckt und zur Aufnahme und Befestigung des Transfermoduls vorgesehen ist. Dadurch kann das Transfermodul als Modulbaustein in das Grundgestell beziehungsweise das Gehäuse einsetzbar sein, wodurch eine einfache Montage ermöglicht ist. Das Grundgestell kann sowohl in einer Tischbauweise als auch in einer Konsolbauweise vorgesehen sein.

Des Weiteren ist bevorzugt vorgesehen, dass die Montagefläche des Transfermoduls an oder auf der U-förmigen Ausnehmung am Grundgestell anordenbar ist und vorzugsweise diese U-förmige Ausnehmung schließt. Dies ermöglicht einerseits eine geschlossene Anordnung eines solchen Montagemoduls und einen gefahrlosen Rücktransport der Werkstückträger innerhalb der U-förmigen Aufnahme.

Die Transportebene für den Vortransport der Werkstückträger liegt bevorzugt außerhalb beziehungsweise oberhalb der U-förmigen Aufnahme des Grundgestells. Die Rücktransportebene der Werkstückträger liegt vorzugsweise innerhalb der U-förmigen Aufnahme. Dadurch kann eine geschützte Anordnung für den Rücktransport der Werkstücke in einfacher Weise ermöglicht sein.

Alternativ kann die Transportebene für den Vor- und Rücktransport oberhalb der U-förmigen Aufnahme außerhalb des Grundgestells liegen.

In einem unteren Abschnitt des Gehäuses des Grundgestells ist vorteilhafterweise eine Antriebswelle vorgesehen, die sich über die gesamte Länge erstreckt. Benachbart dazu sind in dem Gehäuse Öffnungen in einem Rastermaß in der Seitenwand vorgesehen, welche durch abnehmbare Abdeckungen verschließbar sind. Diese Ausgestaltung ermöglicht, dass in Abhängigkeit des Bedarfs beziehungsweise der Größe der Montagestation einzelne, insbesondere mechanisch angetriebene Antriebsmodule seitlich an das Gehäuse anschließbar sind, so dass für die einzelnen Antriebsmodule über die Öffnungen eine Antriebsverbindung geschaffen werden kann. Dies ermöglicht gleichzeitig eine kompaktbauende Anordnung einer solchen Montagemaschine.

An den äußeren Seitenwänden des Gehäuses sind Anschraubelemente oder Anschraubflächen für die Antriebsmodule ausgebildet. Vorzugsweise sind diese Anschraubflächen an einer Außenseite der U-förmigen Aufnahme vorgesehen. Durch die U-förmige Aufnahme beziehungsweise der senkrecht stehenden Schenkel kann zum einen ein Schutz für die Werkstückträger des Rücktransports gegeben sein, und zum anderen können in einfacher und kompakter Bauweise die Antriebsmodule daran befestigt werden.

Des Weiteren erstreckt sich bevorzugt zumindest ein Antriebselement von der Antriebswelle über die Öffnung in der Seitenwand des Gehäuses außerhalb des Gehäuses und treibt ein mechanisches Antriebsmodul an. Bedarfsmäßig kann ein solches Antriebselement, beispielsweise ein Riemen oder eine Kette, daran angebracht werden, um eine Antriebswelle eines solchen mechanischen Montagemoduls anzutreiben.

Das mechanische Antriebsmodul weist vorzugsweise zwei Kurvenscheiben auf einer Kurvenwelle auf, die parallel zur Antriebswelle ausgerichtet ist, wobei die Kurvenscheiben in Z-Richtung ausgerichtete Antriebsstößel oder Hubstößel zum Antrieb von Handhabungseinrichtungen auf und ab bewegen.

Des Weiteren sind die mechanischen Antriebsmodule bevorzugt direkt oder mittels Abstandshalter, die vorzugsweise mit einem Rastermaß bezüglich deren Länge ausgebildet sind, in unterschiedlichen Abständen im Gehäuse anordenbar. Dies ermöglicht wiederum in einfacher und schneller Weise durch Auswahl einer vorbestimmten Länge des Abstandshalters die Fixierung des Antriebsmoduls zum Gehäuse. Gleichzeitig kann über diese Abstandshalter auch eine Einstellung des Antriebsmoduls in der Höhe - also in Z-Richtung - und nicht nur quer zur Transportrichtung - also in der Y-Richtung - ermöglicht sein.

Des Weiteren ist bevorzugt vorgesehen, dass elektrische Antriebsmodule zumindest zwei servomotorisch angetriebene Linearführungen mit daran angeordneten Stößeln umfasst, die vorzugsweise parallel zueinander ausgerichtet sind. Durch solche Linearantriebe kann eine exakte Auf- und Abbewegung der Stößel erfolgen, um an einzelne Montageeinheiten anzutreiben.

Des Weiteren kann eine Anbaueinrichtung vorgesehen sein, welche ein am Gehäuse des Grundgestells montierbare erste Flanschfläche aufweist und eine zweite Flanschfläche zur Aufnahme von einer Handhabungseinrichtung, Konsolen für Wendel- oder Linearförderer, Vereinzelungseinrichtungen oder einem Werkzeug umfasst, welche zur ersten Flanschfläche fest oder durch zumindest einen Antrieb, insbesondere Servoantrieb, in zumindest zwei voneinander abweichende Richtungen verfahrbar ist. Bei letzterem kann beispielsweise eine in X- und in Z-Richtung verfahrbare Anbaueinrichtung vorgesehen sein, um das elektrische Antriebsmodul oder dergleichen in eine entsprechende exakte Position zum Werkstückträger zu positionieren, der in Transportrichtung entlang der Y-Richtung verfahrbar ist.

Des Weiteren kann das mechanische oder elektrische Antriebsmodul eine Handhabungseinrichtung antreiben. Beide Antriebsmodule eignen sich zum Antrieb von Handhabungseinrichtungen, welche eine vordefinierte Schnittstelle aufweisen, um einen einfachen Anbau an die Antriebsmodule zu ermöglichen.

Die Handhabungseinrichtung kann in vielfältiger Weise ausgebildet und auf den jeweiligen Einsatz angepasst sein. Beispielsweise kann die Handhabungseinrichtung ein Greifelement umfassen, um eine Drehbewegung oder Umsetzbewegung eines Werkstücks auf der Werkstückauflage zu ermöglichen. Ebenso kann die Handhabungseinrichtung einen Linearantrieb umfassen, um eine Verfahrbewegung des Werkstücks vom Werkstückträger in eine benachbarte Bearbeitungsstation zu ermöglichen und nach der Bearbeitung wieder auf die Werkstückauflage aufzusetzen.

Die der Erfindung zugrunde liegende Aufgabe wird des Weiteren durch ein Umsetzmodul für ein modulares Montage-Transfersystem gelöst, bei welchem eine Ausführungsform des vorstehend beschriebenen Transfermoduls feststehend an dem Grundgestell vorgesehen ist und ein weiteres Transfermodul nach einem der vorstehend beschriebenen Varianten umfasst, welches zum feststehenden Transfermodul zumindest um eine Achse schwenkbar oder verfahrbar ist und eine Wendeeinrichtung oder eine Dreheinrichtung für zumindest einen Werkstückträger bildet. Die im Umsetzmodul verwendeten Ausführungsformen der Transfermodule sind vorzugsweise gleich ausgebildet, so dass ein problemloses Einfahren der Werkstückträger von dem feststehenden Transfermodul in den Abschnitt des Transfermoduls ermöglicht ist, welches die Wendeeinrichtung oder der Dreheinrichtung bildet und nach dem Verfahren innerhalb der Wendeeinrichtung oder der Dreheinrichtung wieder in das feststehende Transfermodul zurückgeführt werden kann, so dass der Werkstückträger über eine Rücktransportstrecke zum Ausgangspunkt zurückkehrt. Durch eine solche Wendeeinrichtung oder der Dreheinrichtung kann eine zeitsparende Umsetzung der Werkstückträger aus einer Transportstrecke in eine Rücktransportstrecke rückgeführt werden. Ein solches Umsetzmodul ist bevorzugt am Ende und am Beginn einer Transportförderstrecke vorgesehen, wobei dazwischen liegend eine unterschiedlich große Anzahl von Montagemodulen angeordnet sein kann.

Bevorzugt ist vorgesehen, dass die Wendeeinrichtung oder der Dreheinrichtung den oder die Werkstückträger aus der Transportstrecke in einer Entnahmeposition aufnimmt und durch eine Drehung, vorzugsweise um wenigstens 90°, insbesondere um 180°, in eine Übergabeposition für den Rücktransport überführbar ist.

Dies ermöglicht während dem Einfahren von Werkstückträgern in das Umsetzmodul gleichzeitig ein Ausfahren der Werkstückträger aus dem Umsetzmodul in das Montagemodul. Beispielsweise kann durch eine Verschwenkung um 180° eine Verkürzung der Taktzeit ermöglicht sein.

Eine vorteilhafte Ausführungsform des Umsetzmoduls sieht vor, dass zwei Führungen einander spiegelbildlich zugeordnet sind, welche um eine Achse parallel oder senkrecht zur Transportrichtung drehbar sind.

Das modulare Montage-Transfersystem umfasst vorteilhafterweise ein oder mehrere Montagemodule sowie am Beginn und am Ende einer Förderstrecke der Werkstückträger, die sich durch die einzelnen Bearbeitungsstationen hindurch erstreckt, jeweils ein Umsetzmodul, welches in Abhängigkeit der Auswahl des linearmotorischen Antriebs für das Transfermodul ausgewählt ist.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Ansicht eines Montage-Transfersystems,
- Figur 2: eine schematisch vergrößerte Darstellung eines Montagemoduls,
- Figur 3: eine schematische Ansicht eines Montagemoduls ohne Umhausung,
- Figur 4: eine perspektivische Ansicht von oben auf das Montagemodul gemäß Figur 3,
- Figur 5: eine perspektivische Ansicht eines mechanischen Antriebsmoduls,
- Figur 6: eine perspektivische Ansicht eines alternativen elektrischen Antriebsmoduls,
- Figur 7a: eine perspektivische Ansicht auf eine erste Ausführungsform eines Transfermodul,
- Figur 7b: eine perspektivische Ansicht auf eine alternative Ausführungsform zu Figur 7a,
- Figur 8a: eine schematische Stirnansicht auf das Transfermodul gemäß Figur 7a,
- Figur 8b: eine schematische Stirnansicht auf das Transfermodul gemäß Figur 7b,
- Figur 9: eine perspektivische Ansicht einer alternativen Ausführungsform zu Figur 7,
- Figur 10: eine schematische Stirnansicht der Ausführungsform gemäß Figur 9,
- Figur 11: eine perspektivische Ansicht einer weiteren Ausführungsform zu Figur 7,
- Figur 12: eine schematische Stirnansicht der Ausführungsform gemäß Figur 11,
- Figur 13: eine perspektivische Ansicht einer weiteren Ausführungsform eines Transfermoduls,
- Figur 14: eine schematische Stirnansicht der Ausführungsform gemäß Figur 13,
- Figur 15a: eine perspektivische Ansicht der weitere Ausführungsform des Transfermoduls,
- Figur 15b: eine perspektivische Ansicht einer alternativen Ausführungsform des Transfermoduls zu Figur 15 a,
- Figur 16a: eine schematische Stirnansicht auf die Ausführungsform gemäß Figur 15a,
- Figur 16b: eine schematische Stirnansicht auf die Ausführungsform gemäß Figur 15b,
- Figur 17a: eine perspektivische Ansicht einer weiteren Ausführungsform des Transfermoduls,
- Figur 17b: eine perspektivische Ansicht einer weiteren alternativen Ausführungsform des Transfermoduls zu Figur 17a,
- Figuren 18a u. 18b: perspektivische Ansichten eines Umsetzmoduls,
- Figur 19: eine perspektivische Ansicht eines alternativen Umsetzmoduls zu den Figuren 18,
- Figur20: eine perspektivische Ansicht eines Grundgestells zur Aufnahme eines Transfermoduls,
- Figur 21: eine perspektivische Ansicht des Montagemoduls gemäß Figur 3 mit verschiedenen Anordnungsmöglichkeiten von Werkstückträgern,
- Figur 22: eine perspektivische Ansicht des Montagemoduls gemäß Figur 3 mit einem alternativen Aufbau und Anordnung von Handhabungseinrichtungen,
- Figur 23: eine perspektivische Ansicht des Montagemoduls gemäß Figur 3 mit einem weiteren alternativen Aufbau und
- Figur 24: eine perspektivische Ansicht des Montagemoduls gemäß Figur 3 mit einem weiteren alternativen Aufbau.

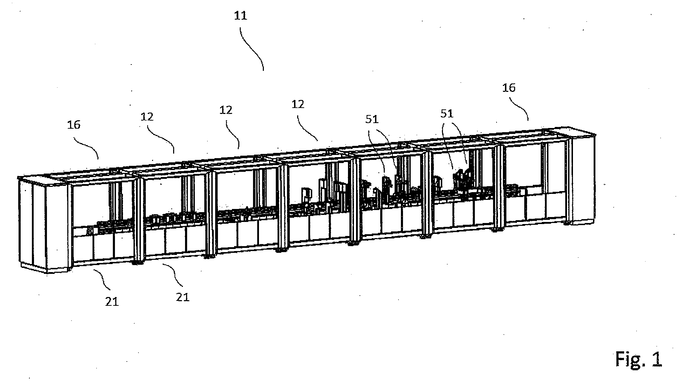

In Figur 1 ist perspektivisch ein Montage-Transfersystem 11 als Längstransfersystem dargestellt. Dieses Montage-Transfersystem 11 umfasst mehrere Montagemodule 12, die eine gemeinsame Transportförderstrecke bilden, entlang der einzelne Handhabungseinrichtungen 51 angeordnet sind. Am vorderen und hinteren Ende der Transportförderstrecke beziehungsweise dem ersten und letzten Montagemodul 12 zugeordnet ist ein Umsetzmodul 16 vorgesehen, durch welches die entlang einer Transportförderstrecke verfahrbaren Werkstückträger 17 eines Transportmodul 18 umgesetzt werden, so dass diese nach dem Durchlaufen der Transportförderstrecke zurück transportiert werden können. Die Montagemodule 12 und Umsetzmodule 16 sind in einer Umhausung 21 vorgesehen. Am vorderen und hinteren Ende der Umhausung 21 können Schaltschränke, Steuerungen, Datenverarbeitungsgeräte oder Auswerteeinheiten vorgesehen sein, um das Montage-Transfersystem 11 zu steuern und zu überwachen.

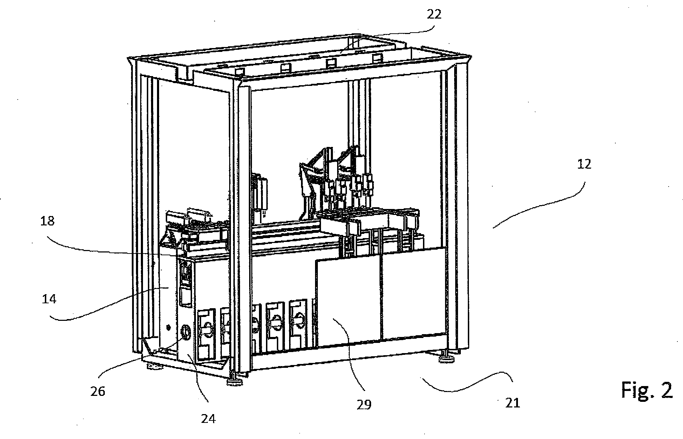

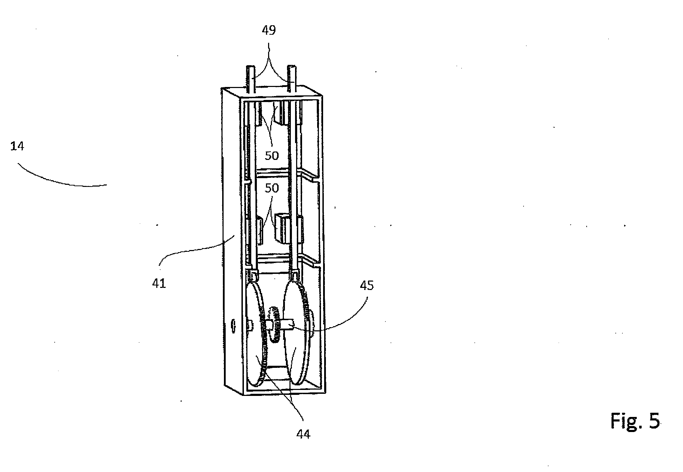

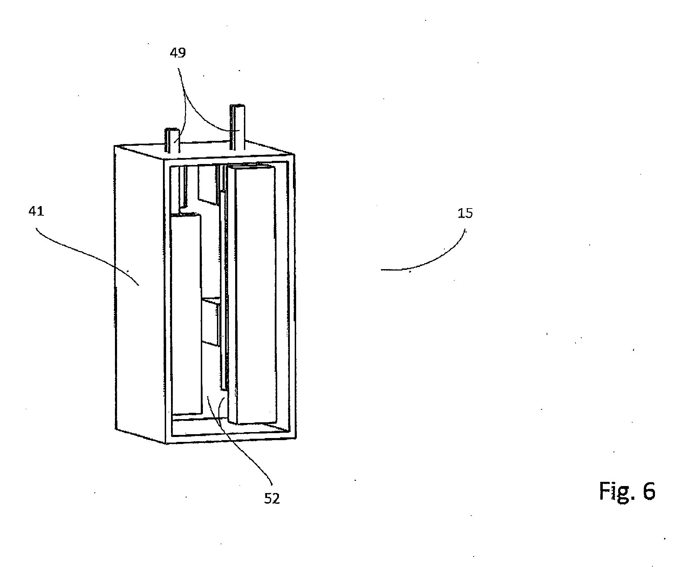

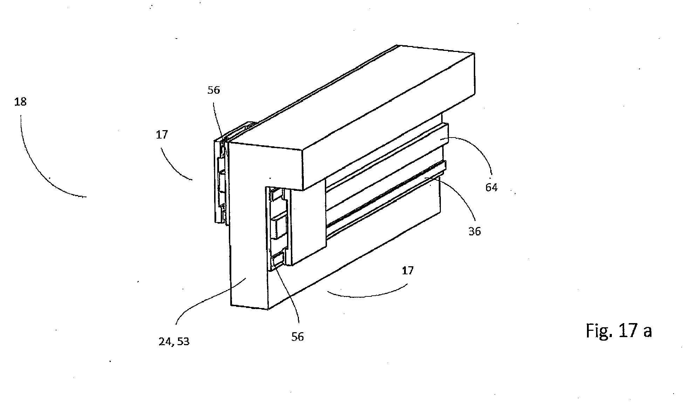

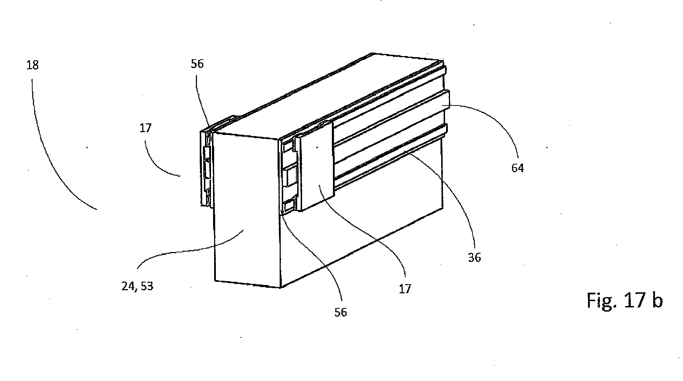

In Figur 2 ist schematisch vergrößert ein Montagemodul 12 mit der Umhausung 21 dargestellt. Das Montagemodul 12 umfasst ein Grundgestell 24, welches das Transfermodul 18 aufnimmt als auch eine in dem Grundgestell 24 angeordnete Antriebswelle 26, welche sich über die gesamte Länge des Grundgestells 24 erstreckt und am jeweiligen stirnseitigen Ende einen Anschlussflansch 25 aufweist, so dass die Antriebswelle 26 eines benachbarten Montagemoduls 12 oder eines Antriebsmotor 84 (Figur 17) daran anschließbar und drehfest verbunden ist. An einer Seitenwand 30 des Grundgestells 24 sind elektrische Bearbeitungs- und/oder Handhabungsmodule 14, 15 montiert. Beispielsweise können servogetriebene elektrische Antriebsmodule 15 (Figur 6) und/oder mechanisch betriebene Antriebsmodule 14 (Figur 5) eingesetzt werden.

Die Umhausung 21 weist im Bereich der Antriebsmodule 14 Schutzwände 29 auf und kann darüber liegend transparente Schutzscheiben umfassen. In einzelnen Anwendungsfällen kann eine solche Umhausung 21 auch entbehrlich sein. Die Umhausung 21 kann eine Decke umfassen, in der beispielsweise Kabelführungen 22 integriert sind. Die Decke kann durch vertikale Streben getragen werden. Zusätzlich können die Streben an einem Grundgestell 24 angeordnet sein, auf welchem das Transfermodul 18 aufliegt. Vorteilhafterweise entspricht die Umhausung 21 dem Rastermaß des Montagemoduls 12. Alternativ kann das Rastermaß der Umhausung 21 von dem des Montagemoduls 12 abweichen.

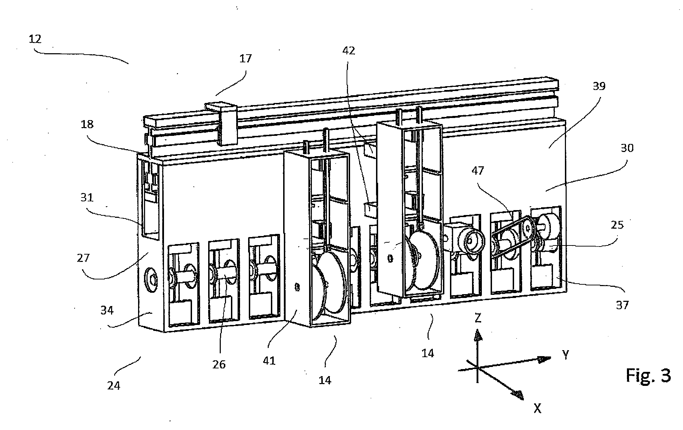

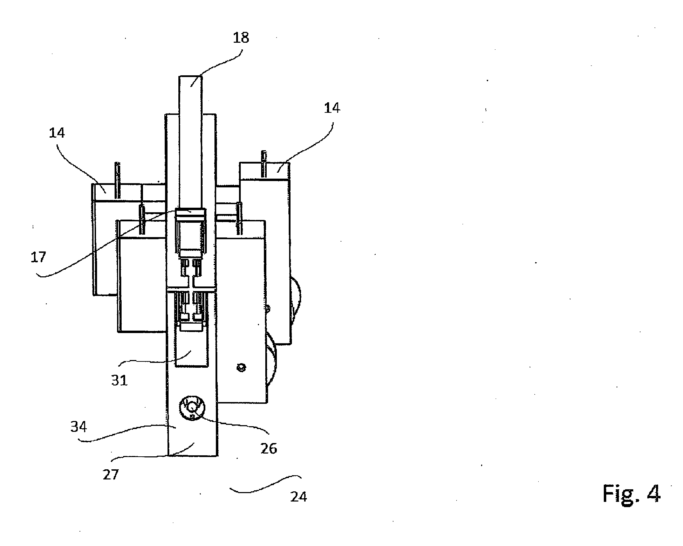

In Figur 3 ist eine perspektivische Ansicht des Montagemoduls 12 ohne Umhausung 21 dargestellt. Figur 4 zeigt eine perspektivische Ansicht von oben auf das Montagemodul 12 gemäß Figur 3.

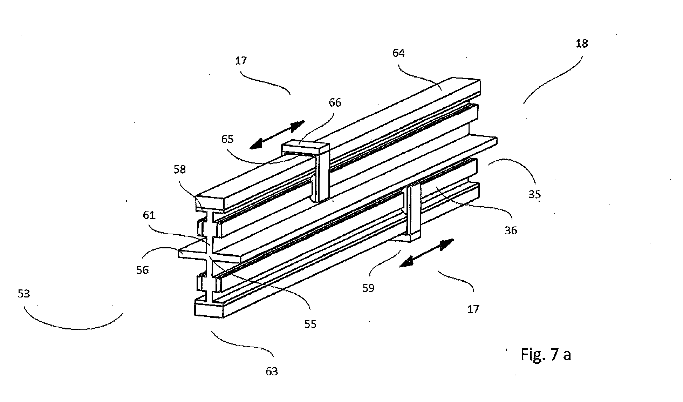

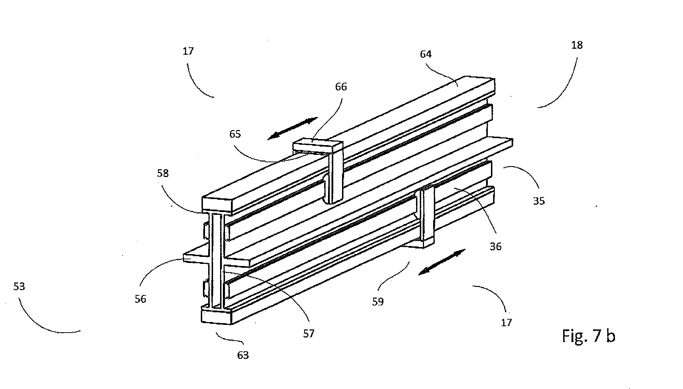

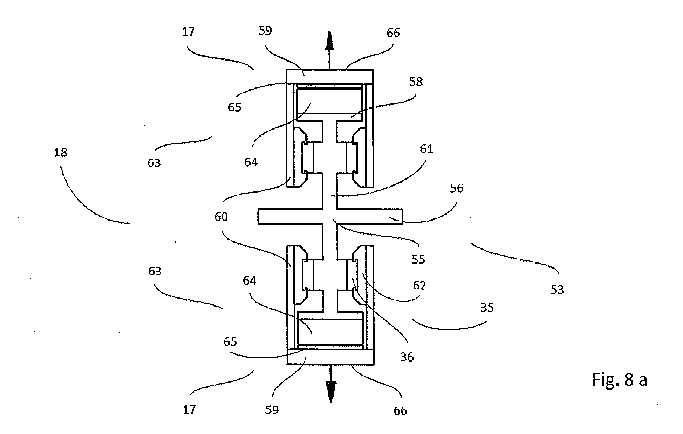

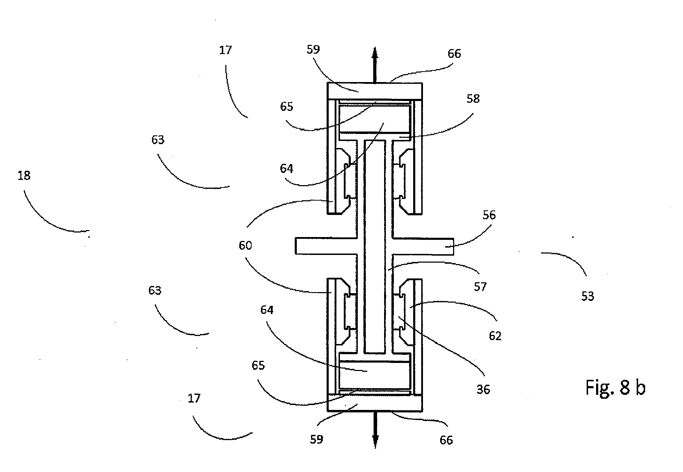

Das Grundgestell 24 ist beispielsweise als ein länglich rechteckförmiges Gehäuse 27 ausgebildet, welches eine nach oben offene U-förmige Ausnehmung 31 aufweist. In diese U-förmige Ausnehmung 31 ist das Transfermodul 18 teilweise einsetzbar. Das Transfermodul 18 ist in den Figuren 3 und 4 in einer ersten Ausführungsform dargestellt, welche nachfolgend in Figur 7 und 8 im Detail beschrieben wird. Durch das Transfermodul 18 wird die Transportstrecke des Montagemoduls 12 gebildet, wobei vorzugsweise die Länge des Transfermoduls 18 und die des Grundgestells 24 gleich ist, so dass bei dem Montagemodul 12 am vorderen und hinteren Ende eine definierte Anschlussschnittstelle 34 zum Anschluss oder zum Anbinden von einem weiteren Montagemodul 12 oder einem Umsetzmodul 16 vorgesehen ist. Die Anschlussschnittstelle 34 ist bevorzugt durch eine ebene Stirnfläche an einer Stirnseite des Grundgestells 24 gebildet. An der Stirnseite im Grundgestell 24 ist eine Durchbrechung für einen Anschlussflansch oder eine Kupplung an der Antriebswelle 26 vorgesehen.

An Seitenwänden 30 des Grundgestells 24 sind im unteren Bereich Öffnungen 37 vorgesehen, welche vorzugsweise in einem Rastermaß benachbart zueinander angeordnet sind. Diese Öffnungen 37 können durch Abdeckungen bedarfsweise geschlossen sein. Oberhalb dieser Öffnungen 37 sind an den Seitenwänden 30 Anschlusselemente 39 vorgesehen, die ermöglichen, dass die Antriebsmodule 14, 15 in einfacher Weise daran befestigbar sind. Diese Antriebsmodule 14, 15 können mit deren Gehäuse 41 unmittelbar an der Seitenwand 30 befestigt sein. Alternativ können Abstandshalter 42 dazwischen liegend angeordnet werden, durch welche ein Abstand in Y-Richtung - also quer zur Transportförderrichtung, welche in X-Richtung ausgerichtet ist - ermöglicht ist.

In Abhängigkeit der Größe der zu bearbeitenden Werkstücke 19 werden die Antriebsmodule 14, 15 in X- und Y-Richtung an das Grundgestell 24 angeschlossen und mit der Antriebswelle 26 antriebsverbunden. Diese können ein- und/oder beidseitig des Grundgestells 24 und/oder einander gegenüberliegend vorgesehen sein. Ebenso ist eine versetzte Anordnung zueinander möglich.

In Figur 5 ist das mechanische Antriebsmodul 14 vergrößert dargestellt und weist zwei Kurvenscheiben 44 auf, welche durch eine Kurvenwelle 45 drehfest miteinander verbunden sind, auf, die im Gehäuse 41 gelagert ist. Über ein Antriebselement 47, wie beispielsweise ein Riemen, eine Kette oder dergleichen (Figur 3), ist die Kurvenwelle 45 mit der Antriebswelle 26 zwangsweise antriebsverbunden. Die Hubstößel 49 werden mittels Führungselementen 50 auf und ab bewegbar geführt, wobei die Z-Bewegung der Hubstößel in Abhängigkeit der Geometrie der Kurvenscheibe 44 steht. Durch die Kurvenscheibe 44 werden die in Z-Richtung ausgerichtete Hubstößel 49 angetrieben, um Handhabungseinrichtungen 51, wie diese beispielsweise in Figur 2 dargestellt sind, zu betätigen, so dass diese eine Montageaufgabe, eine Handhabungsaufgabe oder eine Bearbeitung eines Bauteils eines Werkstücks 19 durchführen. Der Abstand der Antriebsmodule 14 in X-Richtung ist durch die Öffnungen 37 bzw. der Antriebskopplung zur Antriebswelle 26 festgelegt und kann zusätzlich noch durch Abstandselemente 42 justiert werden. Im Gebrauchszustand ist das Gehäuse 41 durch eine Abdeckplatte verschlossen. In Figur 6 ist eine Alternative eines mechanischen Antriebsmoduls 14 dargestellt. Hierbei handelt es sich um ein elektrisches, insbesondere servogetriebenes elektrisches, Antriebsmodul 15, bei welchem ebenfalls beispielsweise zwei Hubstößel 49 in Z-Richtung verfahrbar angetrieben werden. Hierbei ist abweichend zum mechanischen Antriebsmodul 14 vorgesehen, dass die Hubstößel 49 mittels servogetriebenen Linearantrieben 52 angesteuert werden. Entgegen zur rein mechanischen Ansteuerung des mechanischen Antriebsmoduls 14 ist das elektrische Antriebsmodul 15 ausschließlich elektrisch angesteuert.

Das Transfermodul 18 ist perspektivisch in Figur 7a und in einer schematischen Stirnansicht in Figur 8a näher dargestellt. Das Transfermodul 18 ist als geradlinige Führung 35 ausgebildet. Diese weist einen Träger 53 mit einem T-förmigen Grundkörper 55 auf, der mit einer Montageeinrichtung, die vorzugsweise als Montageplatte 56 verbunden ist. Der Grundkörper 55 ist stehend auf der Montageplatte 56 angeordnet. Diese Montageplatte 56 kann auf der U-förmigen Ausnehmung 31 des Grundgestells 24 aufliegen und diese U-förmige Ausnehmung 31 gleichzeitig abdecken. Durch einen vertikalen Steg 61 ist der horizontale Steg zur Montagefläche beabstandet. Der horizontale Steg bildet einen Halteabschnitt 58, auf welchem ein Primärteil 64 eines Linearantriebs 63 aufgenommen ist. Am vertikalen Steg 61 ist vorteilhafterweise beidseitig eine Führungsschiene 36 einer Führung 35 vorgesehen, durch welche der Werkstückträger 17 entlang dem Grundkörper 55 verfahrbar aufgenommen ist.

Der Werkstückträger 17 umfasst einen Laufwagen 59 mit seitlichen Wangen 60, so dass der Laufwagen 59 einen U-förmigen Querschnitt aufweist, wobei an den jeweiligen freien Enden der Wangen 60 komplementäre Führungselemente vorgesehen sind, um an einer Führungsschiene 36 anzugreifen. Durch diese Aufnahme des Laufwagens 59 ist ein horizontal angeordneter Werkzeugträger 17 geschaffen, das heißt, die Aufnahmefläche 66 des Werkstückträgers 17 ist horizontal ausgerichtet. Unterhalb der Aufnahmefläche 66 ist am Laufwagen 59 das Sekundärteil 65 angeordnet, welches dem Primärteil 64 gegenüberliegt. Das Primärteil 64 besteht aus aneinandergereihten elektromagnetischen Spulen, die vorteilhafterweise in einzelne Sektionen eingeteilt und gezielt ansteuerbar sind. Der Sekundärteil 65 besteht aus nebeneinander angeordneten Permanentmagneten. Dadurch ist eine exakte Verfahrbewegung des Werkstücks 17 entlang der Transportstrecke ermöglicht.

Die bislang beschriebene Ausführungsform des Transfermoduls 18 stellt eine einfache Ausführungsform dar, welche nur eine Transportstrecke für einen Vor- oder Rücktransport umfasst. Die im Ausführungsbeispiel dargestellte Ausführungsform umfasst einen Träger 53, bei welchem an der Montageeinrichtung 56 der T-förmige Grundkörper 55 spiegelbildlich an der Montageplatte 56 befestigt ist, so dass an einer Montageplatte 56 zwei Transportstrecken für Werkstückträger 17 befestigt sind. Diese Anordnung weist den Vorteil auf, dass beispielsweise die obere Führung 35 für die Werkstückträger 17 als Transportstrecke von Bearbeitungsstation zu Bearbeitungsstation vorgesehen ist bzw. von Handhabungseinrichtung 51 zu Handhabungseinrichtung 51 vorgesehen ist und die untere Führung 35 für die Werkstückträger 17 als Rücktransportstrecke ausgebildet ist, wobei die Werkstückträger 17 in einer Überkopf-Anordnung zurückverfahren werden.

Durch einen solchen Linearantrieb 63 des Transfermoduls 18 können die Werkstückträger 17 einzeln und unabhängig voneinander angesteuert werden. Ebenso ist eine exakte Ansteuerung einer Vorschubstrecke beziehungsweise einer Transportstrecke möglich. Durch einen solchen Linearantrieb 63 kann ein Wegmesssystem integriert sein.

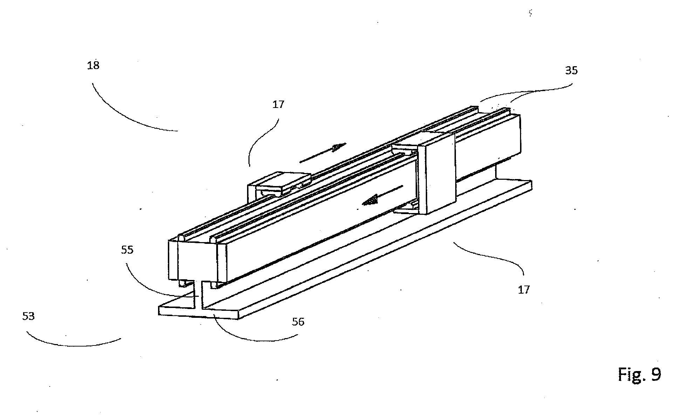

Diese Anordnung des Transfermoduls 18 ist sowohl für das Durchlaufen der Transportstrecke als auch die Rücktransportstrecke vorgesehen. In Abhängigkeit eines von anhand Figur 9 beschriebenen Umsetzmoduls 16 kann die Führung 35 für die Transportstrecke gleich ausgerichtet sein wie für die Rücktransportstrecke. Alternativ kann die Führung 35 der Rücktransportstrecke auch um 180° gedreht werden, so dass eine Überkopfrückführung der Werkstückträger 17 erfolgt.

In Figur 7b ist eine alternative Ausführungsform des Transfermoduls 18 gemäß Figur 7a, 8a dargestellt. Die Figur 8b zeigt eine Stirnansicht der Ausführungsform des Transfermoduls 18, gemäß Figur 7b. Dieses Transfermodul 18 unterscheidet sich von der Ausführungsform gemäß den Figuren 7a und 8a dahingehend, dass ein rohrförmiger Grundkörper 57 vorgesehen ist. Dieser rohrförmige Grundkörper 57 ist beispielsweise länglich rechteckig und vorteilhafterweise senkrecht stehend ausgerichtet. An dem rohrförmigen Grundkörper 57 ist ebenfalls beidseitig die Montageplatte 56 angeordnet oder angeformt. Der rohrförmige Grundkörper 57 ersetzt quasi den vertikalen Steg 61 des Transpondermoduls 18 in Figur 7a. Im Übrigen gelten die Ausführungen zu Figur 7a und 8a.

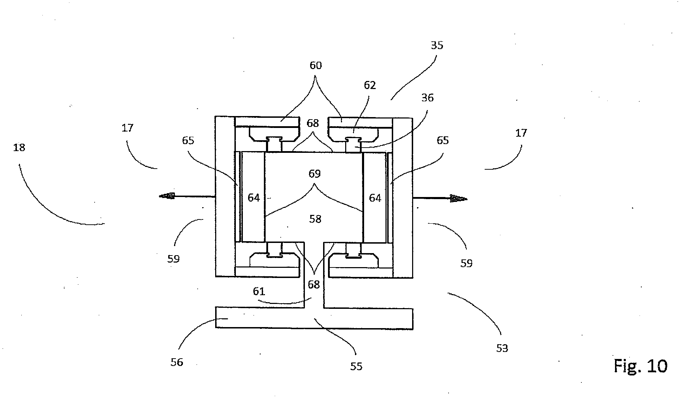

In Figur 9 ist eine perspektivische Ansicht einer alternativen Ausführungsform des Transfermoduls 18 dargestellt. Die Figur 10 zeigt eine Stirnansicht des Transfermoduls 18 gemäß Figur 9. Bei dieser Ausführungsform umfasst der Träger 53 eine Montageplatte 56, auf der stehend ein T-förmiger Grundkörper 55 angeordnet ist. Alternativ kann anstelle des T-förmigen Grundkörpers 55 auch ein rohrförmiger Grundkörper 57 vorgesehen sein. Der als Quersteg ausgebildete Halteabschnitt 58 des T-förmigen Grundkörpers 55 ist abweichend zur Ausführungsform gemäß den Figuren 7 und 8 ausgebildet, wobei die Dicke beziehungsweise in diesem Fall die Erstreckung in Z-Richtung auf die Breite der Werkstückaufnahmefläche 66 des Werkstückträgers 17 angepasst werden kann. Der Halteabschnitt 58 des T-förmigen Grundkörpers 55 weist zwei zueinander beabstandete horizontale Befestigungsabschnitte 68 auf, an welchen jeweils eine Führungsschiene 36 angeordnet ist. Zwischen den horizontalen Befestigungsabschnitten 68 sind vertikale Befestigungsabschnitte 69 vorgesehen, an welchen jeweils das Primärteil 64 des Linearantriebs 63 angeordnet ist. Somit liegt zwischen den die beiden Werkstückträger 17 verfahrbar aufnehmenden Führungsschienen 36 das Primärteil 64. Der Werkstückträger 17 ist mit seiner Werkstückaufnahmefläche 66 vertikal ausgerichtet. Seitliche Wangen 60 greifen an den Führungsschienen 36 an. Auf einer Unterseite der Werkstückaufnahmefläche 66 beziehungsweise zum Grundkörper 55 weisend ist das Sekundärteil 65 am Werkstückträger 17 beziehungsweise Laufwagen 59 befestigt.

Diese Anordnung ist bevorzugt spiegelbildlich an der Montageplatte 56 angeordnet, so dass bei dieser Ausführungsform die Werkstückträger 17 hängend verfahren werden und deren Werkstückaufnahmefläche 66 vertikal ausgerichtet sind. Somit ist an dem einen Träger 53 sowohl eine Transportebene für einen Vortransport als auch getrennt dazu eine Transportebene für den Rücktransport vorgesehen und vertikal ausgerichtet.

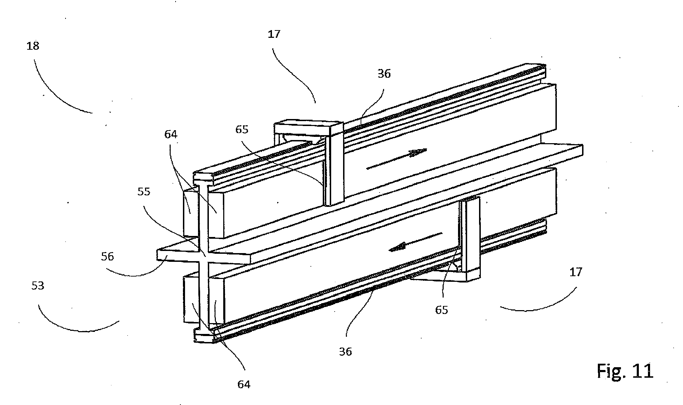

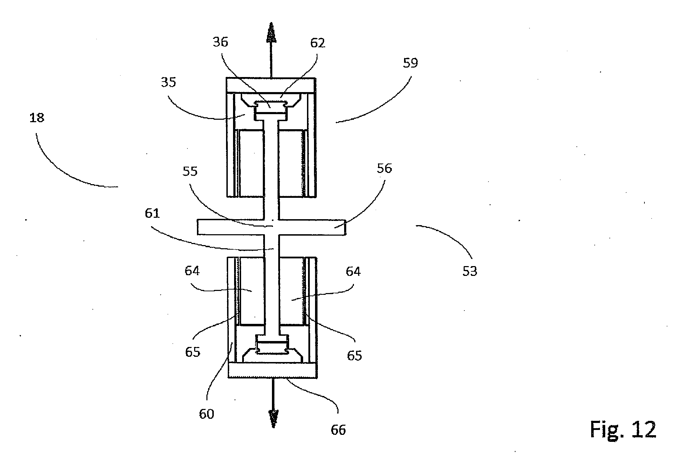

In den Figuren 11 und 12 ist eine alternative Ausführungsform des Transfermoduls 18 zu den Ausführungsformen gemäß den Figuren 7 und 8 dargestellt. Prinzipiell weist der Träger 53 einen analogen Aufbau zu dem in den Figuren 7 und 8 auf, indem an der Montageplatte 56 jeweils spiegelbildlich ein T-förmiger Grundkörper 55 angeordnet ist. Alternativ zu dem spiegelbildlich angeordneten T-förmigen Grundkörper 55 kann der vertikale Abschnitt durchgehend durch einen rohrförmigen Grundkörper 57 ausgebildet sein, wie dies beispielsweise in Figur 7b dargestellt ist. Abweichend ist bei dieser Ausführungsform gegenüber der in den Figuren 7 und 8 vorgesehen, dass die Führungsschiene 36 an dem Quersteg des T-förmigen Grundkörpers 55 angeordnet und jeweils das Primärteil 64 an dem vertikalen Steg des Grundkörpers 55 vorgesehen ist. Bei dieser Ausführungsform liegen die vertikalen Stege 61 der beiden T-förmigen Grundkörper 55 in einer gemeinsamen Achse.

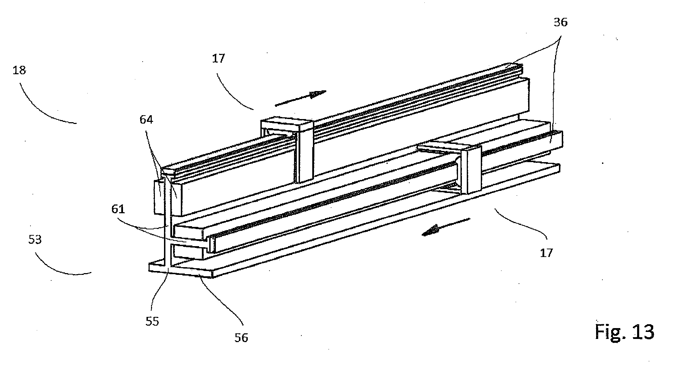

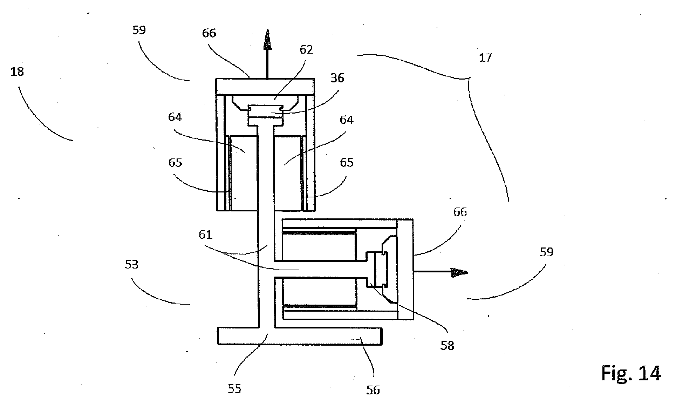

In Figur 13 ist eine weitere alternative Ausführungsform des Transfermoduls 18 zu den vorstehenden Ausführungsformen beschrieben. Figur 14 zeigt eine Stirnansicht gemäß der Ausführungsform gemäß Figur 13. Die Führung 35 des Werkstückträgers 17 an dem T-förmigen Grundkörper 55 entspricht der in Figur 11 beschriebenen Ausführungsform. Anstelle der spiegelbildlichen Anordnung des weiteren T-förmigen Grundkörpers 55 zur Montageplatte 56, bei welchem die vertikalen Stege 61 an einer gemeinsamen Achse liegen, ist bei dieser Ausführungsform vorgesehen, dass die Achsen der vertikalen Stege 61 im rechten Winkel zueinander angeordnet sind und der vertikale Steg 61 der zweiten Führung 35 an dem vertikalen Steg 61 der ersten Führung 35 angeordnet ist. Dadurch werden die Transportebenen rechtwinklig zueinander ausgerichtet. Es ist eine horizontale und eine vertikale Transportebene gegeben, zu denen die Werkstückaufnahmefläche 66 entsprechend ausgerichtet ist.

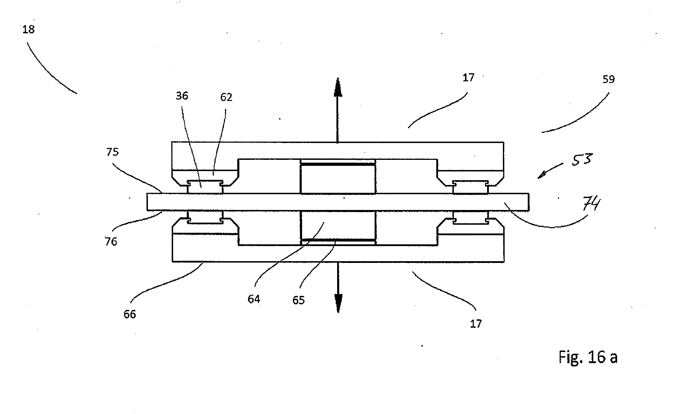

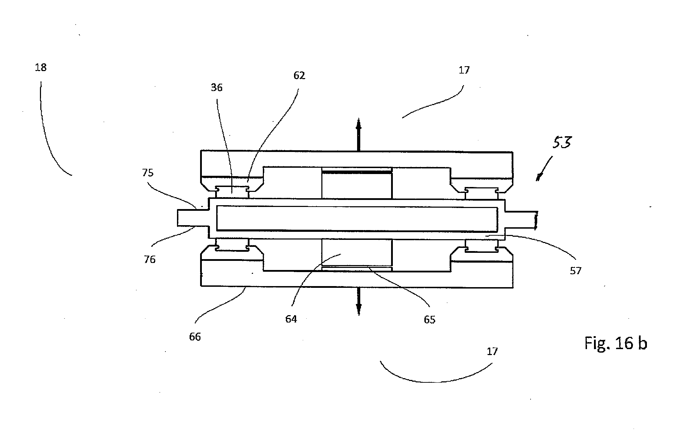

Auch bei dieser Ausführungsform kann wahlweise vorgesehen sein, dass ein oder beide Stege 61 rohrförmig ausgebildet sind, so dass auch bei dieser Ausführungsform ein oder zwei rohrförmige Grundkörper 57 vorgesehen sein können, die in Analogie zu dem Grundkörper 55 gemäß Figur 16 angeordnet sein können.

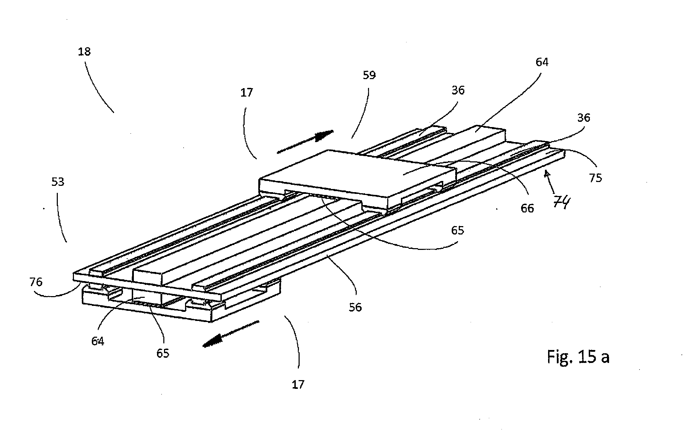

In Figur 15a ist eine perspektivische Ansicht einer weiteren alternativen Ausführungsform des Transfermoduls 18 dargestellt. Die Figur 16a zeigt eine schematische Stirnansicht. Bei dieser Ausführungsform besteht der Träger 53 aus einer Montageplatte 56 und bildet gleichzeitig den plattenförmigen Grundkörper 74. Auf einer Oberseite 75 und einer Unterseite 76 des Grundkörpers 74, welcher der Montageplatte 56 entspricht, sind jeweils Führungsschienen 36 angeordnet. Dazwischen liegend ist bevorzugt das Primärteil 54 an der Montageplatte 56 befestigt. Durch die Führungsschienen 36 wird der Werkstückträger 17 verfahrbar geführt, wobei auf dessen Innen- oder Unterseite das Sekundärteil 65 angeordnet ist. Die Werkstückaufnahmefläche 66 ist sowohl für den Vortransport als auch den Rücktransport horizontal ausgerichtet, sofern die Montageplatte 56 horizontal ausgerichtet ist. Alternativ kann die Montageplatte 56 auch vertikal ausgerichtet sein, wobei dementsprechend die Aufnahmeflächen 66 der Werkstückträger 17 ebenfalls vertikal ausgerichtet sind. Durch diese Anordnung kann beispielsweise der Vortransport entlang der Oberseite 75 der Montageplatte 56 und der Rücktransport als eine Überkopfanordnung entlang der Unterseite 76 erfolgen.

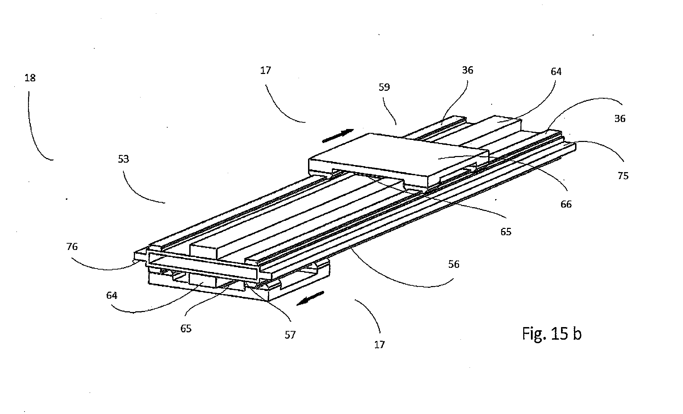

In Figur 15b ist eine perspektivische Ansicht einer alternativen Ausführungsform zu Figur 15a dargestellt. Die Figur 16b zeigt eine schematische Stirnansicht der alternativen Ausführungsform gemäß Figur 15b. Diese Ausführungsform unterscheidet sich von der Ausführungsform in Figur 15a und 16a dahingehend, dass anstelle des plattenförmigen Grundkörpers 74 ein rohrförmiger Grundkörper 57 vorgesehen ist. Dieser kann vollständig als rohrförmiger Grundkörper 57 ausgebildet sein oder wie dies in Figur 15b dargestellt ist, noch seitlich plattenförmige Abschnitte aufweisen, um eine Montageplatte 56 auszubilden. In Figur 17a ist eine perspektivische Ansicht einer weiteren alternativen Ausführungsform des Transfermoduls 18 dargestellt. Die Ausführungsform entspricht dem Aufbau dem in Figur 15 und 16 dargestellten Transfermodul. Abweichend hiervon ist vorgesehen, dass der Träger 53 auf einem Grundgestell 24 angeordnet ist oder der Träger 53 gleichzeitig das Grundgestell 24 bildet, und daran Montageplatten 56 angeordneten sind. Das Grundgestell 24 kann beispielsweise eine L-förmige Kontur aufweisen, wobei der obere kurze L-förmige Schenkel zu Anordnung und Aufnahme von Handhabungseinrichtungen oder dergleichen ist. Im Übrigen wird bezüglich der Ausführungsform des Aufbaus der Führungsschiene 36 sowie des Antriebs des Werkstückträgers 17 auf die Figuren 15 und 16 Bezug genommen.

Das Grundgestell 24 kann beispielsweise durch zwei rohrförmige Grundkörper 57 ausgebildet sein, die L-förmig zueinander angeordnet sind. Ein unterer stehender rechteckförmiger rohrförmiger Grundkörper kann an einer oberen Stirnseite einen liegenden rohrförmigen Grundkörper aufnehmen.

In Figur 17b ist eine alternative Ausführungsform des Transfermoduls 18 zu Figur 17a dargestellt. Bei dieser Ausführungsform ist vorgesehen, dass anstelle einem Grundgestell 24 mit einer L-förmigen Kontur ein kubisches Grundgestell 24 oder ein Grundgestell 24 mit einem rechteckförmigen Querschnitt vorgesehen ist, wobei wiederum der Träger 53 und das Grundgestell 24 eine gemeinsame Einheit bilden. Jeweils seitlich an den Seitenwänden des Grundgestells 24 ist wiederum jeweils eine Montageplatte 56 zur Aufnahme von der Führungsschiene 36 vorgesehen, so dass insbesondere eine sogenannte hängende Führung ermöglicht ist.

Der Träger 53 gemäß Figur 17b, der gleichseitig das Grundgestell 24 bilden kann, kann wiederum als rohrförmiger Grundkörper ausgebildet sein, wobei dieser ebenso beispielsweise wiederum eine rechteckförmige Kontur aufweisen kann. Der Grundkörper kann auf einer schmaleren Stirnseite stehen und die Montageplatten 56 können an der längeren Seitenkante des rohrförmigen Grundkörpers angebracht sein. Eine Vertauschung ist ebenso möglich, das heißt, dass der rohrförmige Grundkörper auf der langen Seitenkante des rechteckförmigen Querschnitts aufliegt.

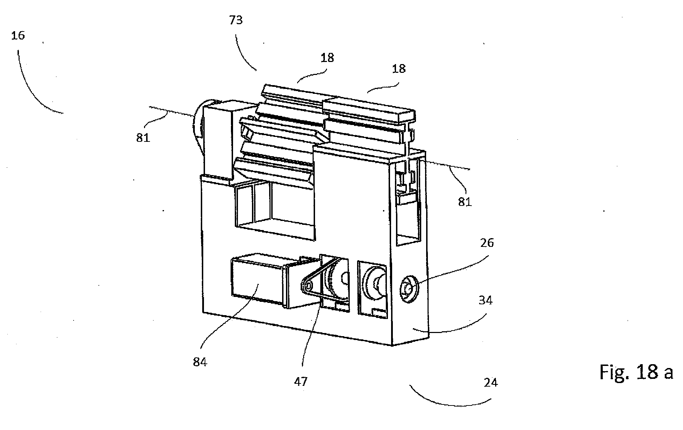

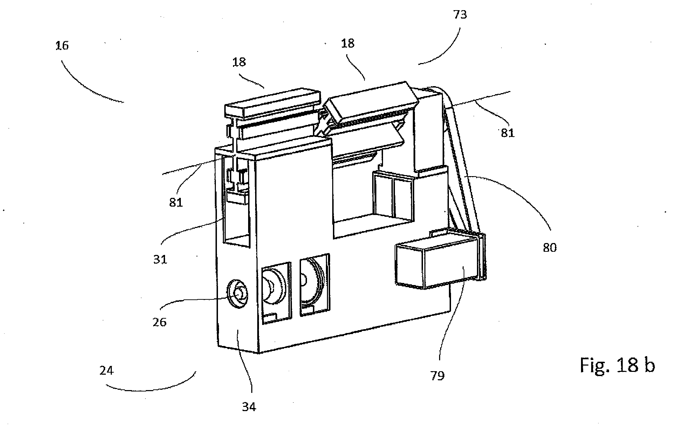

In den Figuren 18a und 18b sind perspektivische Ansichten eines Umsetzmoduls 16 dargestellt. Dieses Umsetzmodul 16 ist für ein Montagemodul 12 gemäß den Figuren 1 bis 3 mit beispielsweise einem Transfermodul 18 gemäß den Figuren 7 und 8 oder den Figuren 11 und 12 ausgebildet. Bei einer Anpassung des Grundgestells 24 und/oder der U-förmigen Aufnahme 31 können auch die weiteren Ausführungsformen des Transfermoduls 18 für ein solches Umsetzmodul eingesetzt werden.

Das Grundgestell 24 ist bezüglich einem feststehenden Teil des Transfermoduls 18 analog zu dem des Montagemoduls 12 ausgebildet, so dass an dem Umsetzmodul 16 eine gleiche Schnittstelle 34 wie für den Anschluss eines weiteren Montagemoduls 12 beziehungsweise einem Grundgestell 24 des weiteren Montagemoduls 12 gegeben ist. Das Grundgestell 24 weist einen zweiten Bereich auf, in dem ein drehbarer oder schwenkbarer Teil des Transfermoduls 18 aufgenommen ist. Der drehbare Teil des Transfermoduls 18 bildet eine Wendeeinrichtung 73. Die Wendeeinrichtung 73 ist um eine Drehachse 81, die vorzugsweise in der Spiegelebene der Montageplatte 56 liegt, vorgesehen. Dadurch wird ermöglicht, dass bei einer Rotation des Transfermoduls 18 um 180° die Transportstrecke als Rücktransportstrecke positioniert wird und umgekehrt. Somit kann ein gleichzeitiges Be- und Entladen der Werkstückträger 17 des Umsetzmoduls 16 erfolgen.

Zum rotierenden Antrieb der Wendeeinrichtung 73 ist ein Antriebsmotor 79 vorgesehen, der beispielsweise über einen Riemenantrieb 80 oder einen sonstigen Antrieb die Drehachse 81 antreibt, an der das rotierende Transfermodul 18 vorgesehen ist. Der Antriebsmotor 79 kann auch direkt die Wendeeinrichtung 73 antreiben.

Alternativ kann ebenso nur eine rotierende Führung 35 ausgebildet sein, das heißt, dass die Führung 35 zunächst mit Werkstückträgern 17 der Transportstrecke bestückt und anschließend um 180° gedreht wird, um die Werkstückträger 17 der Rücktransportstrecke zuzuführen, so dass nach einer weiteren Drehung um 180° wiederum der Werkstückträger 17 in der Transportebene positioniert ist.

Das Umsetzmodul 16 kann des Weiteren den Antriebsmotor 84 zum Antrieb der Antriebswelle 26 aufnehmen. Dieser ist seitlich zum Grundgestell 24 befestigt, wobei wiederum in Analogie zum Antrieb der Antriebsmodule 14 ein Antriebselement 47 vorgesehen ist, welches die Antriebswelle 26 mit dem Antriebszapfen des Antriebsmotors 84 verbindet.

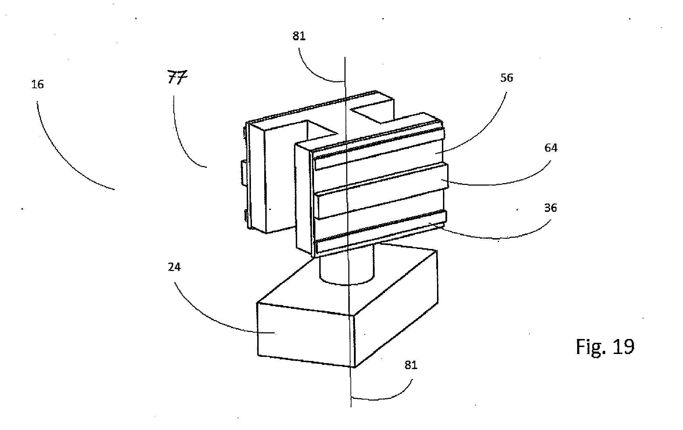

In Figur 19 ist eine perspektivische Ansicht einer alternativen Ausführungsform eines Umsetzmoduls 16 zu den Figuren 18a und 18b dargestellt. Dieses Umsetzmodul 16 ist beispielsweise für ein Transfermodul 18 gemäß Figur 9, 17a und 17b ausgebildet. Bei diesem Umsetzmodul 16 ist vorgesehen, dass die Dreheinrichtung 77 um eine vertikale Achse 81 gedreht wird. Diese Dreheinrichtung 77 wird von dem Grundgestell 24 getragen. Durch eine Drehung um 180° um die vertikale Drehachse 81 ist ein Umsetzen eines Werkstückträgers von einer Vorwärtstransportstrecke in eine Rücktransportstrecke ermöglicht. Im Übrigen kann bezüglich den Ausgestaltungsvarianten und dem Antrieb auf das Umsetzmodul 16 gemäß den Figuren 18a und 18b Bezug genommen werden, die ebenso für dieses Umsetzmodul 16, gemäß Figur 19 gelten.

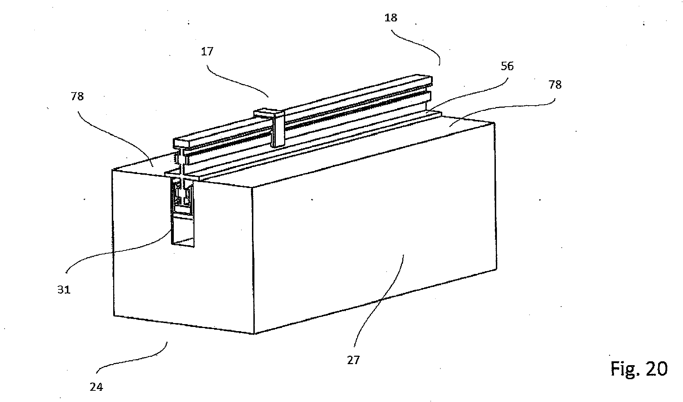

In Figur 20 ist eine perspektivische Ansicht eines Grundgestells 24 mit einer U-förmigen Ausnehmung 31 zur Aufnahme des Transfermoduls 18 dargestellt. Bei diesem Grundgestell 24 ist vorgesehen, dass das Gehäuse 27 seitlich gegenüber der Montageplatte 56 sich in X-Richtung - also quer zur Transportrichtung - weiter erstreckt. Dadurch können Auflagebereiche 78 geschaffen werden, welche beispielsweise zur Aufnahme von Handhabungseinrichtungen 51 dienen können. Ebenso kann dieser Auflagebereich 78 als Anschlussfläche für weitere daran anzubauende Vorrichtungen, wie beispielsweise eine Zuführeinrichtung, eine Vereinzelungseinrichtung, ein Wendelförderer oder dergleichen, sein.

Alternativ zu dieser Ausführungsform kann das Grundgestell 24 in Form eines Tisches ausgebildet sein, so dass eine Umhausung der Antriebswelle 26 und der zweiten Führung 35 für den Rücktransport in der U-förmigen Ausnehmung 31 nicht gegeben ist, das heißt, dass auch keine U-förmige Ausnehmung 31 mehr vorgesehen ist.

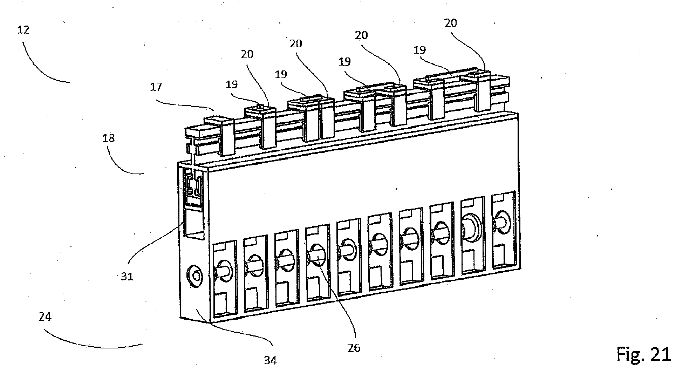

In Figur 21 ist eine perspektivische Ansicht des Montagemoduls 12 gemäß Figur 3 dargestellt, welche verschiedentliche Werkstückträger 17 zeigt. Die Werkstückträger 17 können unterschiedliche Größen bezüglich der Werkstückaufnahmefläche 66 aufweisen und alle durch denselben Linearantrieb 63 angetrieben werden. Der Werkstückträger 17, der beispielsweise in den Figuren 7 und 8 näher beschrieben ist, kann als einzelner Werkstückträger 17 ausgebildet sein, wie die linke Darstellung in Figur 20 zeigt. Dieser kann gemäß der zweiten Darstellung von links das Werkstück 19 aufnehmen, welches auf einer speziellen Werkstückaufnahme oder unmittelbar auf der Auflagefläche 66 des Werkstückträgers 17 aufgelegt sein kann. Der Werkstückträger 17 kann auch durch zwei einzelne Laufwagen 59 gebildet werden, welche durch ein Verbindungselement in unterschiedlichen Abständen zueinander angeordnet sein können, oder durch den darauf aufliegenden Werkstückträger 19, wie dies die weiteren drei Ausführungsbeispiele in Figur 20 zeigen. Dadurch können auch sehr lange Werkstücke 19 aufgenommen werden. Sollte das Werkstück 19 ein zu hohes Gewicht aufweisen, können auch drei oder mehrere Laufwagen 59 an einer Werkstückaufnahme 20 befestigt werden.

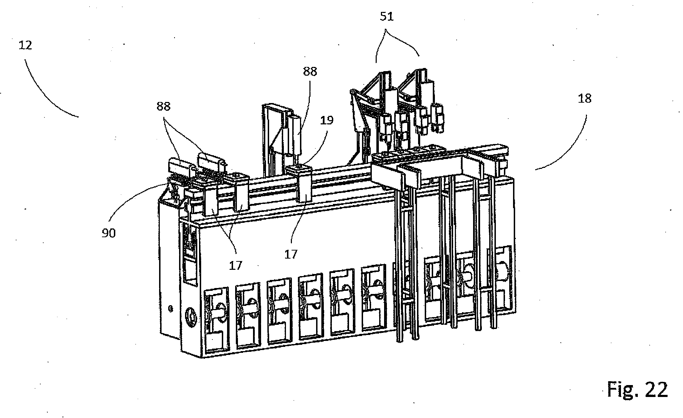

In Figur 22 ist eine perspektivische Ansicht des Montagemoduls 12 mit einer beispielhaften Anordnung von Handhabungseinrichtungen 51 dargestellt. Am linken Ende der Transportstrecke des Montagemoduls 12 sind beispielsweise zwei im Abstand zueinander angeordnete Werkzeuge 88 dargestellt, welche über einen horizontalen Linearantrieb 90 in X-Richtung verfahrbar sind, so dass ein auf dem Werkstückträger 17 aufliegendes Werkstück 19 bearbeitet werden kann. Beispielsweise ist ein Werkstückträger 17 dem linken Werkzeug 88 zugeordnet. Alternativ können auch Werkstückträgergruppen einem Werkzeug 88 zugeordnet werden, wie dies ebenfalls dargestellt ist. Die Anordnung von Zweier-, Dreier-, Vierergruppen usw., bei denen also zwei, drei, vier usw. Werkstückträger 17 eine Gruppe bilden und gemeinsam verfahrbar sind, wobei jeder Werkstückträger 17 ein Werkstück 19 aufnimmt, weist den Vorteil auf, dass diese Werkstückträgergruppe in eine Bearbeitungsstation verfahrbar ist und innerhalb der Bearbeitungsstation nach und nach die auf dem Werkstückträger 17 aufliegenden Werkstücke 19 abgearbeitet werden. Dies kann zu einer Optimierung der Taktzeiten führen.

Des Weiteren ist in Figur 22 ein Werkzeug 88 an einer Säule befestigt, so dass dieses vertikal verfahrbar ist und von oben auf die Transportebene zugeführt werden kann.

Am rechten Ende des Montagemoduls 12 sind weitere Handhabungseinrichtungen 51 vorgesehen. Diese können durch mechanische Antriebsmodule gemäß Figur 5 oder durch elektrische Antriebsmodule gemäß Figur 6 angetrieben werden. Beispielsweise werden Greifelemente 95 eingesetzt, durch welche eine Umsetzbewegung, eine Drehbewegung oder dergleichen erfolgen kann.

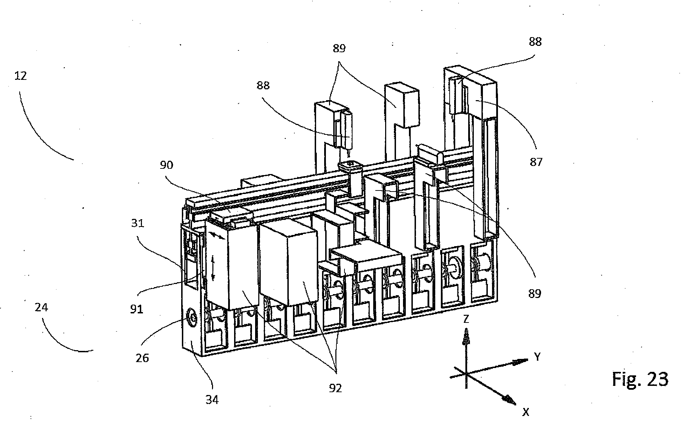

In Figur 23 ist eine perspektivische Ansicht des Montagemoduls 12 mit einer alternativen Anordnung von Anbaueinrichtung 92 dargestellt. Beispielsweise ist am rechten Ende des Montagemoduls 12 ein Portal 87 gebildet, so dass eine Zuführung eines Werkzeugs 88 senkrecht von oben auf das Werkstück 19 ermöglicht ist. Alternativ kann anstelle eines Portals 87 auch eine L-förmige Halterung 89 vorgesehen sein, um das Werkzeug 88 aufzunehmen.

Des Weiteren zeigt diese alternative Ausführungsform die Anordnung einer Anbaueinrichtung 92 als Anbauteil und ist mit einer ersten Flanschfläche 91 an dem Gehäuse 27 befestigt sowie in der Höhe einstellbar. An einer oberen Stirnseite der feststehenden Anbaueinrichtung 92 ist beispielsweise ein Linearantrieb 90 vorgesehen. Hierbei kann es sich um einen X-Y-Tisch handeln, wodurch ein Schlitten sowohl in X- als auch in Y-Richtung verfahrbar ist. Alternativ kann der Schlitten auch nur in X-Richtung verfahrbar sein. Auf diesem Linearantrieb 90 können wiederum Handhabungseinrichtungen 51, Werkzeuge 88 oder dergleichen angeordnet werden.

Die Anbaueinrichtung 92 kann auch als eine Konsole ausgebildet sein, an welcher Anbauteile befestigbar sind, um einzelne Bauteile der Transportstrecke zuzuführen, welche von den Handhabungseinrichtungen 51 auf die Werkstückauflagefläche 66 aufgesetzt oder von dieser zum Abtransport entfernt werden. Beispielsweise können Linearförderer zum Zuführen von Werkstücken 19 vorgesehen sein, ebenso Linearförderer oder Vereinzelungsgeräte. Alternativ kann auch ein Abtransport daran angeschlossen sein.

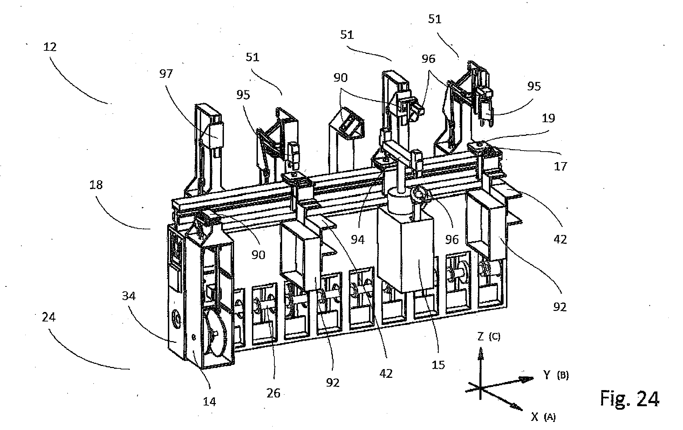

In Figur 24 ist ein weiterer schematischer Aufbau des Montagemoduls 12 dargestellt. Daraus wird die Flexibilität bezüglich dem Anbau und der Anordnung von mechanischen Antriebsmodulen 14, elektrischen Antriebsmodulen 15 und Handhabungseinrichtungen 51 ersichtlich. Beispielsweise kann eine Bearbeitungsstation durch eine Umsetzeinrichtung 94 ausgebildet sein, wodurch entweder Teile aus der Transportstrecke entnommen werden oder ein zu montierendes Bauteil der Transportstrecke zugeführt wird. Diese Umsetzeinrichtung 94 kann einen eigenständigen Antrieb aufweisen. Ebenso kann ein elektrisches Antriebsmodul 15 mit einem Zwischengetriebe vorgesehen sein, wodurch die jeweilige 180° Drehung eingeleitet wird.

Des Weiteren kann beispielsweise ein Drehantrieb 96 vorgesehen sein, um ein Umsetzen oder Drehen eines Bauteils zu ermöglichen. Ebenso können horizontale Linearantriebe 90 oder ein vertikaler Linearantrieb 97 vorgesehen sein, wobei beispielsweise der in x-Richtung antreibbare Linearantrieb 90, der vorne links im Bild 24 dargestellt ist, beispielsweise von einem mechanischen Antriebsmodul 14 angetrieben ist. Im mittleren Bereich ist des Weiteren ein Horizontallinearantrieb 90 angeordnet, der auf einer schrägen Ebene angeordnet ist und zumindest in x-Richtung und/oder entlang der schrägen Ebene verfahrbar ist. Dieser kann beispielsweise mit einem elektrischen Handhabungsmodul 15, aber auch mit einem mechanischen Antriebsmodul 14 angetrieben sein.

Aus dieser Darstellung geht beispielsweise hervor, dass die Anbaueinrichtung 92 als ein offenes Gehäuse ausgebildet sein kann, welches über Abstandselemente in der Höhe und/oder der Nähe zum Gehäuse positionierbar ist. Somit kann diese Anbaueinrichtung 92 in X- und/oder in Z-Richtung variabel positioniert werden.

Darüber hinaus wird ersichtlich, dass verschiedene Handhabungseinrichtungen 51 aufeinander folgend auf einer oder auf beiden Seiten angeordnet sein können, um die jeweilige Bearbeitungs- und/oder Montageaufgabe zu erfüllen.

Alle vorgenannten Merkmale sind jeweils für sich erfindungswesentlich und können beliebig miteinander kombinierbar sein.

## Patentansprüche

1. Transfermodul für modulartiges Montage-Transfersystem (11) mit einer Führung (35), entlang der ein oder mehrere Werkstückträger (17) verfahrbar sind, die durch einen elektromagnetischen Linearantrieb (63), welcher ein Primärteil (64) und ein Sekundärteil (65) umfasst, verfahrbar angetrieben sind, **dadurch gekennzeichnet, dass** eine erste Führung (35) für einen Vortransport und eine zweite Führung (35) für einen Rücktransport des zumindest einen Werkstückträgers (17) vorgesehen ist und die erste und zweite Führung (35) jeweils getrennt mit einer Unterbrechung zueinander in jeweils einer Transportebene an einem gemeinsamen Träger (53) oder Grundgestell (24) angeordnet sind.

2. Transfermodul nach Anspruch 1, **dadurch gekennzeichnet, dass** eine Normale einer Werkstückauflagefläche (66) eines Werkstückträgers (17) auf der ersten Führung (35) für den Vortransport abweichend zu einer Normalen der Werkstückauflagefläche (66) des Werkstücks (17) auf der zweiten Führung (35) für den Rücktransport ausgerichtet ist.

3. Transfermodul nach Anspruch 2, **dadurch gekennzeichnet, dass** an einer Unterseite des Laufwagens (59) des Werkstückträgers (17) das Sekundärteil (64) und an einem Halteabschnitt (58) des Trägers (53) das Primärteil (64) des Linearantriebs (63) vorgesehen sind.

4. Transfermodul nach Anspruch 1, **dadurch gekennzeichnet, dass** der Träger (53) als Grundgestell (24) ausgebildet ist und zumindest einen Halteabschnitt (58) umfasst, so dass an dem Halteabschnitt (58) ein horizontal ausgerichteter Werkstückträger (17) und/oder ein vertikal ausgerichteter Werkstückträger (17) verfahrbar angetrieben ist.

5. Transfermodul nach einem der vorhergehenden Ansprüche **dadurch gekennzeichnet, dass** der Träger (53) einen rohrförmigen Grundkörper (57) umfasst und vorzugsweise zumindest eine Komponente des Grundgestells (24) bildet.

6. Transfermodul nach Anspruch 1, **dadurch gekennzeichnet, dass** der Träger (53) zumindest einen T-förmigen Grundkörper (55) umfasst, der sich längs einer Transportstrecke erstreckt, dessen vertikaler Steg (61) auf einer Montageeinrichtung (56) angeordnet ist und
- dass an dessen oberer Quersteg einen Halteabschnitt (58) bildet, so dass an dem Halteabschnitt (58) ein horizontal ausgerichteter Werkstückträger (17) und/oder ein vertikal ausgerichteter Werkstückträger (17) verfahrbar angetrieben ist oder
- dass beidseitig des vertikalen Stegs (61) Führungsschienen (36) der Führung (35) vorgesehen sind und jeweils eine seitliche Wange (60) eines Laufwagens (59) des Werkstückträgers (17) an den Führungsschienen (36) angreift und der Werkstückträger (17) horizontal ausgerichtet geführt ist oder
- dass an dem vertikalen Steg (61) des T-förmigen Grundkörpers (55) ein senkrecht dazu ausgerichteter zweiter Steg (67) angeordnet ist, dessen oberer Quersteg einen Halteabschnitt (58) bildet, so dass an dem Halteabschnitt (58) ein horizontal ausgerichteter Werkstückträger (17) oder ein vertikal ausgerichteter Werkstückträger (17) verfahrbar angetrieben ist.

7. Transfermodul nach einen der Ansprüche 1 bis 5, **dadurch gekennzeichnet, dass** der Halteabschnitt (58) zur vertikalen Ausrichtung der Werkstückträger (17) einen horizontal ausgerichteten Befestigungsabschnitt (68) für die Führungsschiene (36) der Führung (35) aufweist, an welchem seitliche Wangen (60) des Laufwagens (59) angreifen und dass der Halteabschnitt (58) einen vertikalen Befestigungsabschnitt (69) umfasst, an welchem das Primärteil (64) des Linearantriebs (63) angeordnet ist und vorzugsweise der Halteabschnitt (58) einander gegenüberliegende, vertikal ausgerichtete Befestigungsabschnitte (69) für die Aufnahme des Primär- oder Sekundärteils (64, 65) des Linearantriebs (63) aufweist.

8. Transfermodul nach einem der vorhergehenden Ansprüche, **dadurch gekennzeichnet, dass** der Träger (53) jeweils einen T-förmigen Grundkörper (55) oder rohrförmigen Grundkörper (57) spiegelbildlich zur Montageplatte (56) umfasst.

9. Transfermodul nach einem der Ansprüche 1 bis 7, **dadurch gekennzeichnet, dass** der Träger (53) aus einer Montageplatte (56) besteht und einen plattenförmigen Grundkörper oder rohrförmigen Grundkörper (57) bildet, auf dessen Oberseite (75) und Unterseite (76) jeweils Führungsschienen (36) für eine erste und zweite Führung (35) vorgesehen sind und vorzugsweise zwischen zwei Führungsschienen (36) auf der Oberseite (75) und Unterseite (76) ein Primärteil (64) oder Sekundärteil (65) angeordnet ist.

10. Montagemodul für ein modulares Montage-Transfersystem mit einem Grundgestell (24) und mit einem Transfermodul (18) zum Transport von Werkstücken (19) auf Werkstückträgern (17) entlang des Grundgestells (24), **dadurch gekennzeichnet, dass** das Transfermodul (18) nach einem der Ansprüche 1 bis 8 ausgebildet ist.

11. Montagemodul nach Anspruch 9, **dadurch gekennzeichnet, dass** das Grundgestell (24) eine nach oben offene U-förmige Ausnehmung (31) aufweist, die sich vorzugsweise über die gesamte Länge des Grundgestells (24) erstreckt und zur Aufnahme des Transfermoduls (18) vorgesehen ist und vorzugsweise eine Tischbauweise oder Konsolbauweise umfasst, und vorzugsweise die Montageeinrichtung (56) des Trägers (53) an oder auf der U-förmigen Ausnehmung (31) des Grundgestells (24) anordenbar ist und diese vorzugsweise schließt.

12. Montagemodul nach Anspruch 12, **dadurch gekennzeichnet, dass** die Transportebene für den Vortransport der Werkstückträger (17) außerhalb der U-förmigen Ausnehmung (31) und die Rücktransportebene in der U-förmigen Aufnahme (31) des Grundgestells (24) liegt oder dass die Vor- und Rücktransportebene oberhalb des Grundgestells (24) liegt.

13. Montagemodul nach Anspruch 8, **dadurch gekennzeichnet, dass** eine Anbaueinrichtung (92) vorgesehen ist, welche eine an dem Gehäuse (27) des Grundgestells (24) montierbare erste Flanschfläche (91) aufweist und eine zweite Flanschfläche (93) zur Aufnahme von einer Handhabungseinrichtung (51), Konsolen für die Wendel- oder Linearförderer, Vereinzelungseinrichtungen oder eines Werkzeuges (88) aufweist, welche zur ersten Flanschfläche (91) fest oder durch Antriebe, insbesondere servomotorische Antriebe in zumindest zwei voneinander abweichende Richtungen verfahrbar ist.

14. Umsetzmodul für ein modulares Montagetransfersystem, **dadurch gekennzeichnet, dass** ein Transfermodul (18) nach einem der Ansprüche 1 bis 8 vorgesehen ist, welches feststehend an dem Grundgestell (24) vorgesehen ist und ein weiteres Transfermodul (18) nach einem der Ansprüche 1 bis 8 vorgesehen ist, welches um zumindest eine Achse zum feststehenden Transfermodul (18) schwenkbar oder verfahrbar angeordnet ist und eine Wendeeinrichtung (73) oder Dreheinrichtung (77) für den zumindest einen Werkstückträger (17) bildet.

15. Umsetzmodul nach Anspruch 13, **dadurch gekennzeichnet, dass** die Wendeeinrichtung (73) oder Dreheinrichtung (77) einen Antrieb (79) umfasst, durch welchen das drehbare Transfermodul (18) aus einer Entnahmeposition in der Transportebene in eine Übergabeposition für den Rücktransport überführbar ist und vorzugsweise um wenigstens 90° drehbar ist.

16. Umsetzmodul nach Anspruch 13 oder 14, **dadurch gekennzeichnet, dass** zwei spiegelbildlich zur Montageplatte (56) des Transfermoduls (18) angeordnete Führungen (35) vorgesehen sind, welche um eine parallel oder senkrecht zur Transportebene der Werkstückträger (17) ausgerichtete Achse (81) drehbar sind.

17. Modulares Montage-Transfersystem, **dadurch gekennzeichnet, dass** dieses aus einem oder mehreren Montagemodulen (12) gemäß einem der Ansprüche 9 bis 12 und jeweils am Beginn und am Ende einer Transportförderstrecke ein Umsetzmodul (16) nach den Ansprüchen 13 bis 15 umfasst.
